# DEMANDE DE BREVET EUROPEEN

(11) **EP 1 612 087 A1**
(43) Date de publication de la demande: **04.01.2006**
(21) Numéro de dépôt: 05291365.4
(22) Date de dépôt: 24.06.2005
(51) Int. Cl.: B60L 13/10, B61F 5/44

(54) **Véhicule prévu pour se déplacer le long d'au moins un rail**

(30) Priorité: 02.07.2004 FR 0407401
(71) Demandeur: Alstom Transport S.A., 92300 Levallois-Perret (FR)
(72) Inventeur: Nast, Jean-Daniel, 71200 Le Creusot (FR)
(74) Mandataire: Blot, Philippe Robert Emile

(57) **Abrégé**

Ce véhicule comprend une caisse (3) et un dispositif de sustentation (4), la caisse (3) venant en fonctionnement en appui sur le dispositif de sustentation, ce dernier comportant un premier module (5, 7) et un deuxième module (6, 9) de sustentation reliés à la caisse (3) avec possibilité de mouvement pour permettre l'orientation des modules relativement à la caisse.

Le véhicule comprend des moyens de synchronisation des mouvements des modules (5, 6 ; 7 ,9) de sustentation (3) comprenant un premier vérin hydraulique (59) interposé entre le premier module (5, 7) et la caisse (3), un deuxième vérin hydraulique (60) interposé entre le deuxième module (6, 9) et la caisse (3), et un circuit fluidique (64) reliant les premier et deuxième vérins (59, 60) pour synchroniser les actions des vérins (59, 60).

Application par exemple aux véhicules ferroviaires à sustentation magnétique.

## Description

La présente invention concerne un véhicule prévu pour se déplacer le long d'au moins un rail, comprenant une caisse et un dispositif de sustentation de la caisse sur le rail, la caisse venant en fonctionnement en appui sur le dispositif de sustentation suivant une direction principale d'appui, le dispositif de sustentation comprenant :
- un premier module et un deuxième module de sustentation reliés à la caisse avec possibilité de mouvement dans un plan d'appui perpendiculaire à la direction principale d'appui, pour permettre l'orientation des modules relativement à la caisse, notamment lorsque le véhicule se déplace le long d'un tronçon courbe du rail, et
- des moyens de synchronisation des mouvements dans le plan d'appui des premier et deuxième modules de sustentation relativement à la caisse.

Dans certains véhicules équipés de modules de sustentation magnétique, des modules sont situés à la file sur le rail. La caisse, qui est rigide, repose en appui sensiblement verticalement sur plusieurs modules. Les modules sont guidés sur le rail. Sur des tronçons rectilignes du rail, les modules sont alignés suivant l'axe longitudinal de la caisse. Sur des tronçons courbes du rail, les modules s'orientent pour suivre la courbe du rail. En revanche, la caisse est rigide et ne peut pas suivre la courbe du rail. Les modules sont donc montés mobiles par rapport à la caisse avec une amplitude limitée, suffisante pour permettre l'orientation des modules par rapport à la caisse.

Des moyens de synchronisation des mouvements des modules relativement à la caisse sont généralement prévus. De tels moyens de synchronisation peuvent se présenter sous la forme d'un système à balanciers et câbles de renvoi disposé entre les modules et la caisse. Un tel système comprend un premier balancier disposé entre un premier module et la caisse, un deuxième balancier étant disposé entre un deuxième module et la caisse, des câbles de renvois reliant les balanciers. Un mouvement du premier module relativement à la caisse entraîne un mouvement correspondant du premier balancier. Ce mouvement est transmis par les câbles de renvois au deuxième balancier qui transmet à son tour le mouvement au deuxième module.

Ainsi, lorsque le véhicule entre dans une courbe, le premier module guidé sur le rail s'oriente relativement à la caisse de façon à suivre la courbe du rail, et entraîne en synchronisme une modification de l'orientation du second module relativement à la caisse.

Néanmoins, de tels systèmes sont compliqués. En effet, le bas de la caisse du véhicule doit être conçu pour recevoir les câbles et les balanciers. Le bas de caisse doit comprendre des moyens de fixation et des passages et/ou des poulies pour le cheminement des câbles qui doivent être tendus entre les balanciers. Ceci impose des contraintes de conception de la caisse.

Un but de la présente invention est de proposer un véhicule du type précité dont la liaison entre la caisse et le dispositif de sustentation soit simplifiée.

A cet effet, l'invention a pour objet un véhicule du type précité caractérisé en ce que les moyens de synchronisation comprennent :
- au moins un premier vérin hydraulique interposé entre le premier module et la caisse,
- au moins un deuxième vérin hydraulique interposé entre le deuxième module et la caisse, et
- un circuit fluidique reliant les premier et deuxième vérins pour synchroniser les actions des vérins.

Selon des modes particuliers de réalisation, le véhicule peut comprendre l'une ou plusieurs des caractéristiques suivantes, prise(s) isolément ou selon toutes les combinaisons techniquement possibles :
- les premier et deuxième modules sont disposés à la file l'un derrière l'autre, les premier et deuxième vérins étant interposés entre la caisse et les extrémités respectivement des premier et deuxième modules opposées à leurs extrémités adjacentes ;
- les vérins comprennent des tiges mobiles, les vérins étant disposés de façon que leurs tiges se déplacent latéralement par rapport à la caisse ;
- les premier et deuxième vérins sont reliés de façon qu'un déplacement latéral dans un sens de la tige d'un vérin provoque un déplacement latéral dans le sens opposé de la tige de l'autre vérin ;
- les vérins hydrauliques sont des vérins hydrauliques à double effet comprenant chacun une première chambre et une deuxième chambre séparées par un piston solidaire de la tige du vérin ;
- les première et deuxième chambres du premier vérin sont en communication fluidique avec les première et deuxième chambres du deuxième vérin par l'intermédiaire du circuit fluidique ;
- les modules de sustentation sont des modules de sustentation magnétique comprenant des moyens magnétiques aptes à coopérer avec des moyens magnétiques complémentaires du rail.

L'invention sera mieux comprise à la lecture de la description qui va suivre, donnée uniquement à titre d'exemple, et faite en se référant aux dessins annexés, sur lesquels :
- la figure 1 est une vue schématique de dessus d'un véhicule conforme à l'invention se situant sur un tronçon de rail rectiligne ;
- la figure 2 est une vue schématique de dessus du véhicule se situant sur un tronçon de rail courbe ;
- la figure 3 est une vue schématique de côté du véhicule ;
- la figure 4 est une vue schématique en coupe selon IV-IV du véhicule, montrant un dispositif de sustentation du véhicule ;
- la figure 5 est une vue schématique en coupe transversale selon V-V du véhicule ;
- la figure 6 est une vue schématique en coupe longitudinale d'une suspension située entre le véhicule et le dispositif de sustentation ; et
- la figure 7 est une vue schématique de dessus de la suspension de la figure 6.

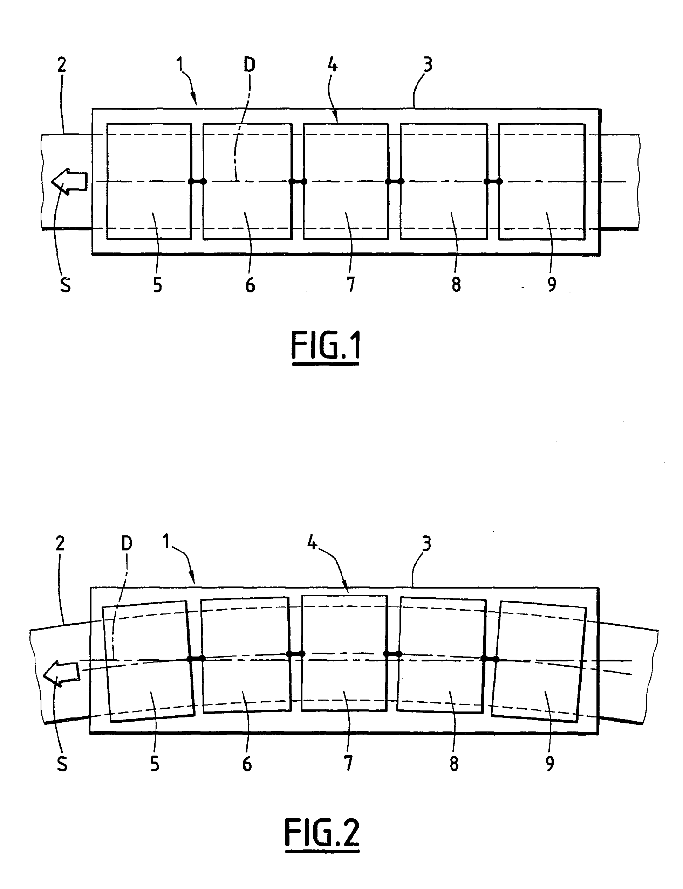

Sur la figure 1, un véhicule 1 prévu pour se déplacer le long d'un rail 2 comprend une caisse 3 reposant sur le rail 2 par l'intermédiaire d'un dispositif de sustentation 4 intégré au véhicule.

Dans tout ce qui suit, les orientations utilisées sont des orientations habituelles d'un véhicule ferroviaire. Ainsi, les termes « avant », « arrière », « droite », « gauche », « latéral », « longitudinal », « supérieur » et « inférieur » s'entendent par rapport à un axe longitudinal du véhicule matérialisé par un trait mixte D, et par rapport au sens de marche du véhicule, matérialisé par une flèche S sur la figure 1.

Le dispositif de sustentation 4 comprend une pluralité de modules 5, 6, 7, 8, 9, ici cinq, répartis à la file suivant l'axe longitudinal D sous la caisse 3. Le dispositif de sustentation 4 comprend, de l'avant vers l'arrière, un premier module ou module avant 5, un deuxième module 6, un troisième module 7, un quatrième module 8, et un cinquième module ou module arrière 9. La caisse 3 est en appui sur chacun des modules 5, 6, 7, 8, 9 selon une direction principale d'appui, perpendiculaire au plan de la figure 1.

Les modules 5, 6, 7, 8, 9 sont liés à la caisse 3 avec possibilité de mouvement dans un plan « d'appui » perpendiculaire à la direction principale d'appui de la caisse 3 sur les modules 5, 6, 7, 8, 9. Le plan d'appui correspond ici au plan de la figure 1.

Les modules 5, 6, 7, 8, 9 sont équipés de moyens de guidage latéral sur le rail 2, qui seront décrits plus précisément pas la suite.

Lorsque le véhicule 1 se trouve sur un tronçon rectiligne de rail 2 (figure 1), les modules 5, 6, 7, 8, 9 sont alignés suivant l'axe longitudinal D, correspondant à l'axe du rail.

Lorsque le véhicule 1 se trouve sur un tronçon courbe du rail 2 (figure 2), les modules 5, 6, 7, 8, 9 suivent la courbe sensiblement en arc de cercle définie par le rail 2. Chaque module 5, 6, 7, 8, 9 se déplace transversalement relativement à la caisse 3 dans le plan d'appui.

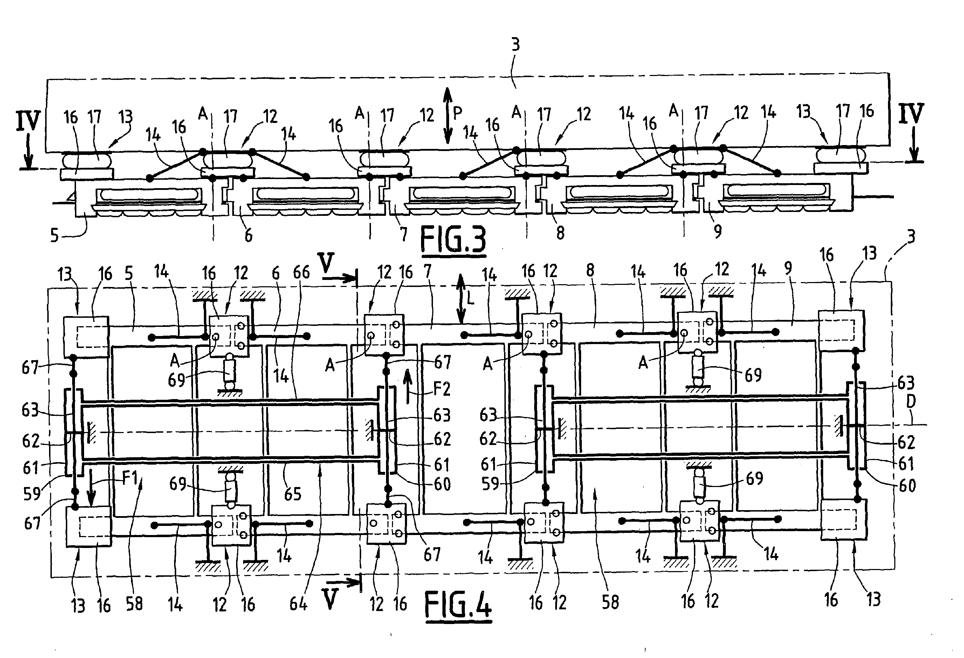

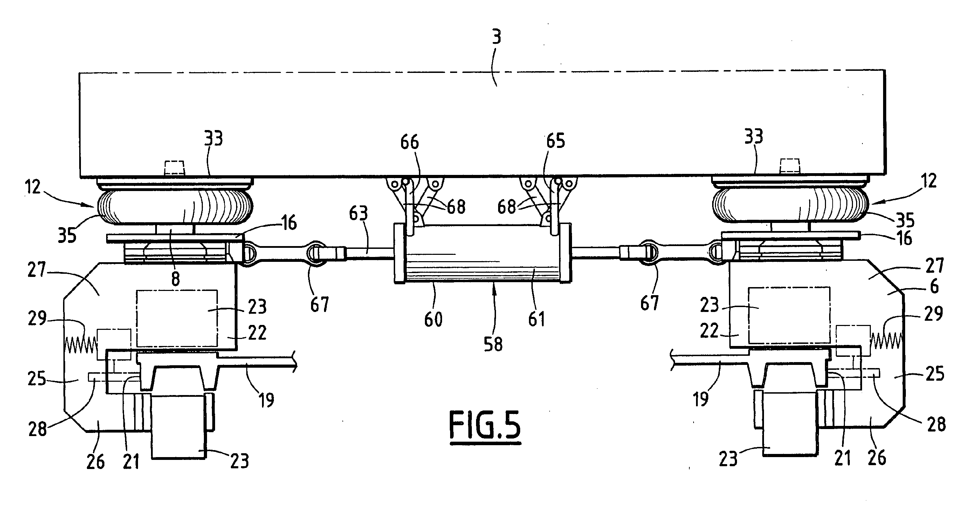

Comme représenté sur les figures 3 et 4, la caisse 3 repose sur les modules 5, 6, 7, 8, 9 par l'intermédiaire de suspensions 12, 13. Une pluralité de suspensions 12, 13 sont réparties sous la caisse 3 entre l'avant et l'arrière de la caisse 3.

Chaque suspension 12, 13 comprend un plateau 16 en appui sur un ou deux modules 5, 6, 7, 8, 9 et un élément élastique 17 (figure 3) disposé entre le plateau 16 et la caisse 3. L'élément élastique 17 autorise un déplacement de la caisse 3 relativement au plateau 16 selon la direction principale d'appui, matérialisée sur la figure 3 par une flèche P.

Des suspensions avant 13 droite et gauche sont situées entre des extrémités avant droite et gauche du premier module 5 et une partie avant de la caisse 3 (à gauche sur les figures 3 et 4). Des suspensions arrière 13 droite et gauche sont disposées entre des extrémités arrière droite et gauche du cinquième module 9 et une partie arrière de la caisse 3 (à droite sur les figures 3 et 4). Les plateaux 16 des suspensions 13 avant et arrière sont fixés rigidement sur les modules avant et arrière 5, 9.

Des suspensions intermédiaires 12 sont disposées entre les suspensions avant et arrière 13. Chaque suspension intermédiaire 12 se situe à la jonction entre deux modules 5, 6, 7, 8, 9 adjacents, et répartit les efforts d'appui de la caisse 3 sur ces deux modules 5, 6, 7, 8, 9.

A cet effet, le plateau 16 de chaque suspension intermédiaire 12 est fixé à rotation par une liaison pivot d'axe A parallèle à la direction d'appui P sur celui des deux modules considérés qui est situé devant, et vient en appui plan glissant sur le module situé derrière.

En vue de l'entraînement longitudinal de la caisse 3 par les modules 5, 6, 7, 8, 9, chaque module 5, 6, 7, 8, 9 est relié à la caisse 3 par une bielle d'entraînement 14 solidarisant le module 5, 6, 7, 8, 9 à la caisse en déplacement longitudinal. Chaque bielle 14 a une de ses extrémités fixée sur un module 5, 6, 7, 8, 9, et l'autre extrémité solidaire de la caisse 3. La fixation des bielles 14 sur la caisse 3 sera mieux détaillée par la suite.

Les structures des modules 5, 6, 7, 8, 9 sont similaires. Seule la structure du deuxième module 6 sera décrite en détail.

Comme cela est visible sur la figure 5, le rail 2 comprend deux ailes 19 latérales, une aile droite et une aile gauche, distantes latéralement, et s'étendant longitudinalement, i.e. perpendiculairement au plan de la figure 5. Chaque aile 19 présente une surface latérale de guidage 21. Les ailes 19 sont reliées par une portion intermédiaire non représentée.

Le deuxième module 6 comprend deux châssis 22, un châssis droit et un châssis gauche, distants latéralement et longeant en fonctionnement les parties 19 respectivement gauche et droite du rail 2.

Chaque châssis 22 comprend une âme longitudinale à section en C présentant une base 25 d'où partent une branche inférieure 26 et une branche supérieure 27 s'étendant latéralement vers l'autre châssis 22.

Les parties 19 sont en fonctionnement logées entre les branches inférieure 26 et supérieure 27.

La base 25 de chaque châssis 22 porte des moyens de guidage latéral comprenant un galet de guidage 28 en appui sur la surface latérale 21 de la partie 19 correspondante. Le galet 28 est sollicité contre cette surface latérale 21 par un élément élastique ici sous la forme d'un ressort 29 agissant sur un support mobile portant le galet.

Les branches supérieure 27 et inférieure 26 portent des moyens magnétiques 23, du type aimant ou bobine, destinés à coopérer avec des moyens correspondants prévus sur le rail (non visibles) pour maintenir la caisse 3 en sustentation au-dessus du rail 2 et commander le déplacement des modules 5, 6, 7, 8, 9 le long du rail 2.

La caisse 3 du véhicule 1 repose sur l'avant et l'arrière de chaque châssis 22 par l'intermédiaire de suspensions, en l'occurrence des suspensions intermédiaires 12. Seules des suspensions intermédiaires 12 situées à l'arrière du module 6 sont visibles sur la figure 5. Ces suspensions intermédiaires 12 sont disposées entre la caisse 3, le deuxième module 6, et le troisième module 7 (figure 4).

Les suspensions 12, 13 du véhicule 1 sont des suspensions pneumatiques à membrane. Les suspensions 12, 13 présentent toutes des structures similaires. Seule la structure d'une suspension intermédiaire 12 gauche disposée entre la caisse 3, le premier module 5 et le deuxième module 6 sera décrite en détail.

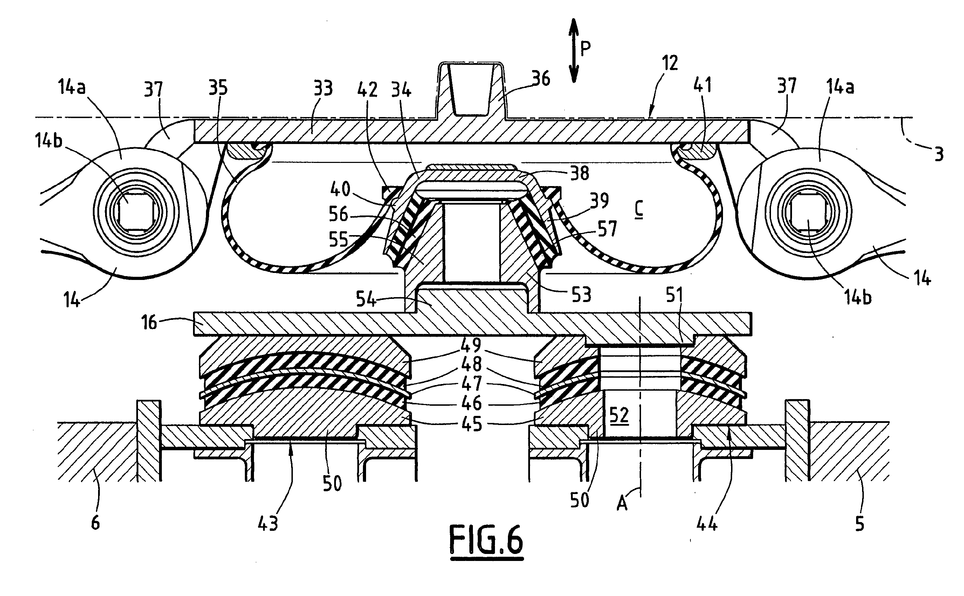

Comme représenté sur la figure 6, la suspension intermédiaire 12 considérée comporte un connecteur supérieur 33, un connecteur inférieur 34 et une membrane annulaire 35.

Le connecteur supérieur 33 se présente sous la forme d'un disque muni en son centre d'un plot de centrage et de fixation 36 en saillie vers l'extérieur de la suspension 12. Le connecteur supérieur 33 s'étend parallèlement au plan d'appui. La caisse 3 est posée en appui sur le connecteur supérieur 33, le plot 36 étant reçu dans un logement complémentaire de la caisse 3. Le plot 36 solidarise le connecteur supérieur 33 et la caisse 3 en déplacement dans le plan d'appui.

Le connecteur supérieur 33 présente deux chapes diamétralement opposées, venues de matière avec le connecteur supérieur 33.

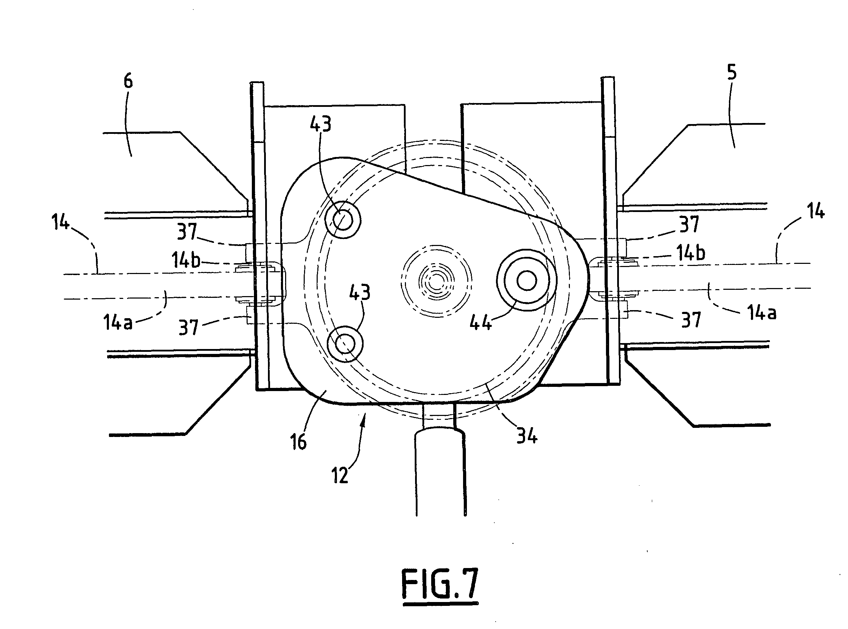

Comme représenté sur la figure 7, les chapes sont formées par des extensions 37 en saillie radialement vers l'extérieur à partir du bord du connecteur supérieur 33. Chaque chape comprend deux extensions 37 entre les extrémités libres desquelles sont fixées les extrémités 14a des bielles d'entraînements 14, au moyen par exemple d'un arbre 14b s'étendant transversalement entre les extensions 37. Les extrémités 14a des bielles sont ainsi solidaires longitudinalement du connecteur supérieur 33 et par conséquent de la caisse 3.

En revenant à la figure 6, les extensions 37 sont courbées axialement du côté opposé au plot 36 pour ne pas interférer avec la caisse 3.

Le connecteur inférieur 34 présente un profil tronconique avec une portion radiale 38 prolongée au niveau de sa zone de plus grand diamètre par une portion tronconique 39 s'étendant du côté opposé au connecteur supérieur 33 en s'évasant. La portion tronconique 39 est munie sur sa surface extérieure d'une nervure annulaire 40 située sensiblement à mi-distance entre la portion radiale 38 et le bord libre de la portion tronconique 39.

La membrane 35 délimite une cavité étanche C sensiblement toroïdale entre le connecteur supérieur 33 et le connecteur inférieur 34.

La membrane 35 comprend un bord supérieur épaissi de grand diamètre fixé de façon étanche contre une surface inférieure du connecteur supérieur 33 à l'aide d'un anneau 41 venant pincer le bord supérieur de la membrane 35. La membrane 35 comprend un bord inférieur de petit diamètre présentant un talon 42 en appui étanche sur la nervure 40 de la surface tronconique 39 du connecteur inférieur 34.

La cavité étanche C est emplie d'un fluide compressible, par exemple de l'air, servant de coussin de suspension. Un effort d'appui dirigé selon la direction d'appui P entraîne une compression du fluide dans la cavité C, s'accompagnant d'une déformation de la membrane 35 et d'un rapprochement des connecteurs 33, 34, permettant un débattement entre les connecteurs 33, 34 suivant la direction d'appui P.

En outre, la membrane déformable 35 autorise grâce à sa souplesse des déplacements relatifs des connecteurs 33, 34 transversalement à la direction d'appui P. Les membranes 35 des suspensions 12, 13 sont du type à grand débattement transversal, c'est-à-dire qu'elles autorisent entre les connecteurs supérieur 33 et inférieur 34 des déplacements transversaux importants relativement aux débattements autorisés selon la direction d'appui P.

Le rapport du déplacement transversal autorisé sur le débattement suivant la direction d'appui P est compris entre 5 et 15. Le débattement selon la direction d'appui P est par exemple compris entre 10 mm et 30 mm. Le débattement transversal est par exemple compris entre 80 mm et 80 mm.

Dans une position de repos, dans laquelle aucun effort transversal ne s'exerce sur la suspension 12, le connecteur supérieur 33 et le connecteur inférieur 34 sont alignés suivant la direction d'appui P. Dans une position décalée, adoptée par la suspension 12 en cas de sollicitation transversale, les connecteurs 33, 34 sont désaxés l'un par rapport à l'autre. Du fait de l'élasticité transversale de la membrane 35, la suspension 12 exerce un effort transversal de rappel des connecteurs 33, 34 vers la position de repos.

Le connecteur inférieur 34 est en appui sur le plateau 16, lui-même en appui sur les modules 5, 6 par l'intermédiaire de butées élastiques 43, 44.

Une butée élastique 43, 44 se présente sous la forme d'un empilement alterné d'éléments rigides métalliques et d'éléments élastiques souples. Plus précisément, chaque butée élastique 43, 44 comprend successivement de bas en haut un pied épais rigide 45, une première couche élastique 46, une couche intermédiaire fine rigide 47, une seconde couche élastique 48, et une tête épaisse rigide 49. Le pied 45 est muni pour sa fixation sur le module 5, 6 correspondant d'un tenon 50 venant se loger dans un logement complémentaire du module 5, 6.

Le plateau 16 vient en appui sur une surface plane supérieure de la tête 49 de la première butée 43 de façon à réaliser un contact plan permettant au plateau 16 de glisser sur la première butée 43 selon le plan d'appui.

Le plateau 16 présente au niveau de la seconde butée 44 une saillie cylindrique 51 venant se loger dans un évidemment cylindrique complémentaire ménagé dans la tête 49 de la seconde butée 44 pour réaliser la liaison pivot d'axe A parallèle à la direction d'appui P entre le plateau 16 et le module 6. Le plateau 16 est ainsi solidaire de la seconde butée 44 transversalement à la direction d'appui P.

Les butées 43, 44 élastiques permettent, en cas de sollicitation importante de la suspension 12, par la compression de leurs couches élastiques 46, 48, un déplacement des plateaux 16 relativement aux modules 5, 6 selon la direction d'appui P, avec une course néanmoins limitée.

Pour améliorer la fixation du plateau 16 sur le premier module 5, un passage traversant 52 est avantageusement prévu dans la deuxième butée 44 pour le passage d'éléments de guidage en rotation, tel un arbre (non représenté).

Le connecteur inférieur 34 est en appui sur le plateau 16 par l'intermédiaire d'une pièce de liaison 53. Le plateau 16 comprend sensiblement en son centre une proéminence 54. La pièce de liaison 53 vient en appui sur le dessus du plateau 16 et présente un évidemment permettant l'engagement de la proéminence 54. La pièce de liaison 53 présente du côté opposé une extrémité 55 tronconique engagée dans le connecteur inférieur 34. L'extrémité tronconique 55 de la pièce de liaison 53 est reliée à la surface intérieure de la portion tronconique 39 du connecteur inférieur 34 par deux couches de matière élastique 56 entre lesquelles est disposé un insert 57 tronconique. Les couches élastiques 56 permettent de filtrer des vibrations.

Comme représenté sur la figure 7, le second module 6 porte deux premières butées 43 espacées latéralement. Le plateau 16 est ainsi en appui sur trois butées, à savoir deux premières butées 43 d'appui plan disposées sur le deuxième module 6 et une deuxième butée 44 de liaison pivot disposée sur le premier module 5.

En revenant aux figures 3 et 4, les suspensions intermédiaires 12 diffèrent les unes des autres selon que des bielles d'entraînement 14 sont raccordées ou non sur leur connecteurs supérieurs.

Plus spécifiquement, les suspensions intermédiaires 12 situées entre les deuxième et troisième modules 6, 7 ne sont pas reliées à ces modules 6, 7 par des bielles d'entraînement 14. Des suspensions intermédiaires 12 situées entre les troisième et quatrième modules 7, 8 ne sont reliées par des bielles d'entraînement 14 qu'au troisième module 7. Les suspensions intermédiaires 12 situées entre les quatrièmes et cinquième modules 8, 9 sont reliées à chacun de ces modules 8, 9 par des bielles d'entraînement 14.

Les suspensions avant et arrière 13 se distinguent des suspensions intermédiaires 12 en ce que leurs plateaux 16 sont fixés rigidement sur les châssis des modules correspondants, à savoir les modules avant 5 et arrière 9.

Les bielles 14 limitent les déplacements longitudinaux des connecteurs supérieurs 34 relativement aux modules 5, 6, 7, 8, 9. Par conséquent, les connecteurs supérieurs 33 des suspensions 12, 13 et la caisse 3 peuvent se déplacer dans le plan d'appui principalement suivant une direction latérale par rapport aux modules 5, 6, 7, 8, 9, i.e. une direction située dans le plan d'appui et perpendiculaire à l'axe longitudinal D de la caisse 3. La direction latérale est perpendiculaire au plan de la figure 6. Cette direction latérale est matérialisée par une flèche L sur la figure 4.

Les bielles 14 sont reliées aux connecteurs supérieurs 33 des suspensions intermédiaires 12 de façon à ne pas entraver les mouvements latéraux des connecteurs supérieurs 33, par exemple en fixant les extrémités 14a des bielles 14 sur les arbres 14b à l'aide de manchons souples en caoutchouc.

Comme représenté sur la figure 4, le véhicule 1 comprend deux ensembles de synchronisation 58 identiques des mouvements des modules 5, 6, 7, 8, 9 relativement à la caisse 3, dans le plan d'appui.

L'ensemble de synchronisation 58 avant illustré sur la figure 4 est disposé de façon à synchroniser les mouvements du premier module 5 et du deuxième module 6.

Il comprend un premier vérin 59 et un deuxième vérin 60. Chaque vérin 59, 60 comprend un cylindre 61, un piston 62 coulissant dans le cylindre 61 et divisant une cavité intérieure du cylindre 61 en deux chambres distinctes, à savoir une première chambre et une deuxième chambre, et une tige 63 solidaire du piston 62. Le cylindre 61 est fixé transversalement sous la caisse 3. La tige 63 est mobile dans le plan d'appui de la caisse sur les modules 5, 6, 7, 8, 9, selon la direction latérale L.

Les premier et deuxième vérins 59, 60 sont reliés par un circuit fluidique 64 fermé. Ce dernier comprend une première conduite 65 mettant en communication fluidique la chambre du premier vérin 59 avec la chambre du deuxième vérin 60 située du même côté et une deuxième conduite 66 mettant en communication fluidique l'autre chambre du premier vérin 59 avec la chambre du deuxième vérin 60 située du même côté, pour synchroniser les mouvements des premier et deuxième vérins 59,60.

Dans l'exemple illustré, la première conduite 65 relie directement les chambres gauches des premier et deuxième vérins 59, 60, et la deuxième conduite 66 relie directement les chambres droites des premier et deuxième vérins 59, 60.

En fonctionnement, les tiges 63 se déplacent latéralement vers la gauche (vers le haut sur la figure 4) ou vers la droite (vers le bas sur la figure 4) du véhicule 1.

Un déplacement vers la gauche de la tige 63 du premier vérin 59, comme illustré par la flèche F1, refoule du fluide contenu dans la chambre du premier vérin 59 située à gauche vers la chambre située à gauche du deuxième vérin 60 et aspire dans la chambre située à droite du premier vérin 59 du fluide venant de la chambre située à droite du deuxième vérin 60. Il en résulte un déplacement vers la droite de la tige 63 du deuxième vérin 60, comme illustré par la flèche F2. De façon similaire, un déplacement vers la droite de la tige 63 du premier vérin 59 entraîne un déplacement vers la gauche de la tige 63 du deuxième vérin 60.

En d'autres termes, un déplacement latéral de la tige 63 du premier vérin 59 entraîne un déplacement latéral opposé de la tige 63 du deuxième vérin 60.

La tige 63 du premier vérin 59 est reliée à ses extrémités par des bielles 67 aux plateaux 16 des suspensions avant 13. La tige 63 du deuxième vérin 60 est reliée à ses extrémités par l'intermédiaire de bielles 67 aux plateaux 16 des suspensions 12 disposées entre la caisse 3 et l'extrémité arrière du deuxième module 6. Comme indiqué précédemment, les plateaux 16 des suspensions intermédiaires 12 considérées sont solidaires en mouvement dans le plan d'appui de l'extrémité arrière du deuxième module 6. Les plateaux 16 des suspensions avant 13 sont solidaires dans le plan d'appui de l'extrémité avant du module 5.

Un déplacement latéral de chaque plateau 16 s'accompagne donc d'un déplacement latéral de l'extrémité correspondante du module 5, 6 associé.

Lorsque le véhicule 1 se déplace le long d'un tronçon rectiligne du rail 2, le premier module 5 et le deuxième module 6 sont alignés avec la caisse 3. Lorsque le véhicule 1 entre dans un tronçon courbe du rail 2, l'extrémité avant du premier module 5, guidée sur le rail 2, suit la courbe du rail 2. Cette extrémité se déplace latéralement dans un sens par rapport à la caisse 3. Ce déplacement entraîne celui de la tige 63 du premier vérin 59, et par conséquent, le déplacement de la tige 63 du deuxième vérin 60 en sens opposé. La tige 63 du deuxième vérin 60 entraîne à son tour l'extrémité arrière du deuxième module 6 en déplacement latéral opposé à celui de l'extrémité avant du premier module 5. Les premier module 5 et deuxième module 6 se retrouvent dans la configuration illustrée sur la figure 2.

Un ensemble de synchronisation 58 arrière (à droite sur la figure 4) est disposé de façon à synchroniser les mouvements, dans le plan d'appui, relativement à la caisse, du troisième module central 7 et du cinquième module arrière 9. Cet ensemble de synchronisation 58 arrière est décrit en conservant les références numériques utilisées précédemment pour les éléments semblables de l'ensemble de synchronisation 58 avant.

La tige 63 du premier vérin 59 de l'ensemble de synchronisation 58 arrière est reliée à ses extrémités par des bielles 67 aux plateaux 16 des suspensions intermédiaires 12 disposées entre la caisse 3 et l'extrémité arrière du troisième module 7. La tige 63 du deuxième vérin 60 de l'ensemble de synchronisation arrière 58 est reliée à ses extrémités par des bielles 67 aux plateaux 16 des suspensions arrières 13 disposées entre la caisse 3 et l'extrémité arrière du cinquième module 9.

Un déplacement latéral de l'extrémité arrière du troisième module 7 relativement à la caisse 3 entraîne le déplacement correspondant de la tige 63 du premier vérin 59 de l'ensemble de synchronisation arrière 58. Cette dernière entraîne le déplacement de la tige 63 du deuxième vérin 60 qui entraîne en mouvement latéral l'extrémité arrière du cinquième module 9. L'extrémité arrière du troisième module 7 et l'extrémité arrière du cinquième module 9 se déplacent latéralement relativement à la caisse 3 en sens opposés.

Les plateaux 16 des suspensions intermédiaires 12 situées entre le premier module 5 et le deuxième module 6, et entre le quatrième module 8 et le cinquième module 9, ne sont pas reliés aux moyens de synchronisation. Ces plateaux 16, sont reliés à la caisse 3 par des amortisseurs latéraux 69 permettant de limiter et de contrôler les mouvements entre la caisse 3 et ces plateaux 16.

Comme représenté sur la figure 2, en situation de virage, la caisse 3 est positionnée relativement aux modules 5, 6, 7, 8, 9, grâce aux ensembles de synchronisation 58, de façon que les premier module 5 et cinquième module 9 se situent d'un côté de l'axe longitudinal D de la caisse 3, les deuxième module 6, troisième module 7 et quatrième module 8 se situant du côté opposé. Cette répartition permet un positionnement satisfaisant de la caisse 3 sur les modules 5, 6, 7, 8, 9 en situation de virage, avec un répartition adéquate des efforts d'appui de la caisse sur les modules 5, 6, 7, 8, 9.

Les moyens de synchronisation s'adaptent facilement sous la caisse 3. L'énergie de déplacement d'un module relativement à la caisse est récupérée par un vérin et simplement transmise à l'autre vérin à l'aide d'un fluide circulant dans les conduites du circuit fluidique de l'ensemble de synchronisation. Les conduites peuvent cheminer d'un vérin vers l'autre simplement, quelque soit le profil du dessous de la caisse. Il n'est pas nécessaire de prévoir des logements ou des passages spécifiques, les conduites pouvant être courbées, cintrées ou pliées à la convenance. En outre, le circuit fluidique est particulièrement simple, ce qui augmente sa fiabilité et diminue la maintenance nécessaire à son bon fonctionnement.

Comme cela est visible sur la figure 6, un cylindre 61 d'un vérin 60 d'un ensemble de synchronisation 58, en l'occurrence le cylindre 61 du deuxième vérin 60 de l'ensemble de synchronisation 58 avant, est simplement fixé sous la caisse 3 au moyens de brides 68 reliant les extrémité du cylindre 61 au dessous de la caisse 3. Les conduites 65, 66 du circuit fluidique 64 sortent du cylindre 61 et cheminent sous le dessous de la caisse 3 pour dégager l'espace situé sous la caisse 3.

L'invention peut s'appliquer à des véhicules munis de moyens de sustentation différents, comme une sustentation mécanique classique à roues.

## Revendications

1. Véhicule (1) prévu pour se déplacer le long d'au moins un rail (2), comprenant une caisse (3) et un dispositif de sustentation (4) de la caisse (3) sur le rail, la caisse (3) venant en fonctionnement en appui sur le dispositif de sustentation (4) selon une direction principale d'appui (P), le dispositif de sustentation (4) comportant :
- un premier module (5, 7) et un deuxième module (6, 9) de sustentation reliés à la caisse (3) avec possibilité de mouvement dans un plan d'appui perpendiculaire à la direction principale d'appui (P), pour permettre l'orientation des modules relativement à la caisse, notamment lorsque le véhicule se déplace le long d'un tronçon courbe du rail, et
- des moyens de synchronisation des mouvements dans le plan d'appui des premier et deuxième modules (5, 6 ; 7 ,9) de sustentation relativement à la caisse (3),
**caractérisé en ce que** les moyens de synchronisation comprennent :
- au moins un premier vérin hydraulique (59) interposé entre le premier module (5, 7) et la caisse (3),
- au moins un deuxième vérin hydraulique (60) interposé entre le deuxième module (6, 9) et la caisse (3), et
- un circuit fluidique (64) reliant les premier et deuxième vérins (59, 60) pour synchroniser les actions des vérins (59, 60).

2. Véhicule selon la revendication 1, **caractérisé en ce que** les premier et deuxième modules (5, 6 ; 7, 9) sont disposés à la file l'un derrière l'autre, les premier et deuxième vérins étant interposés entre la caisse et les extrémités respectivement des premier et deuxième modules (5, 6) opposées à leurs extrémités adjacentes.

3. Véhicule selon la revendication 1 ou 2, **caractérisé en ce que** les vérins comprennent des tiges mobiles (63), les vérins étant disposés de façon que leurs tiges (63) se déplacent latéralement par rapport à la caisse.

4. Véhicule selon la revendication 3, **caractérisé en ce que** les premier et deuxième vérins (59, 60) sont reliés de façon qu'un déplacement latéral dans un sens de la tige (63) d'un vérin (59) provoque un déplacement latéral dans le sens opposé de la tige (63) de l'autre vérin (60).

5. Véhicule selon la revendication 3 ou 4, **caractérisé en ce que** les vérins hydrauliques (59, 60) sont des vérins hydrauliques à double effet comprenant chacun une première chambre et une deuxième chambre séparées par un piston solidaire de la tige (63) du vérin (59, 60).

6. Véhicule selon la revendication 5, **caractérisé en ce que** les première et deuxième chambres du premier vérin (59) sont en communication fluidique avec les première et deuxième chambres du deuxième vérin (60) par l'intermédiaire du circuit fluidique.

7. Véhicule selon l'une quelconque des revendications précédentes, **caractérisé en ce que** les modules de sustentation (5, 6, 7, 8, 9) sont des modules de sustentation magnétique comprenant des moyens magnétiques (23) aptes à coopérer avec des moyens magnétiques complémentaires du rail (2).
